(19) Europäisches Patentamt
European Patent Office
Office européen des brevets

(11) **EP 4 245 614 A1**

(12) **EUROPÄISCHE PATENTANMELDUNG**

(43) Veröffentlichungstag:
20.09.2023 Patentblatt 2023/38

(21) Anmeldenummer: 23150073.7

(22) Anmeldetag: **03.01.2023**

(51) Internationale Patentklassifikation (IPC):
*B60R 16/02* (2006.01)  *H01R 4/66* (2006.01)
*H01R 4/20* (2006.01)  *H01B 5/00* (2006.01)

(52) Gemeinsame Patentklassifikation (CPC):
**B60R 16/0207;** H01R 4/646; H01R 11/12;
H01R 2201/26

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **18.03.2022 DE 102022106331**

(71) Anmelder: **LEONI Bordnetz-Systeme GmbH 97318 Kitzingen (DE)**

(72) Erfinder:
• **MEHL, Stephan 91077 Neunkirchen (DE)**
• **RAU, Markus 97318 Kitzingen (DE)**
• **SEIDEL, Toralf 97232 Giebelstadt (DE)**
• **ENDRES, Michael 97299 Zell am Main (DE)**

(74) Vertreter: **Frenkel, Matthias Alexander Wuesthoff & Wuesthoff Patentanwälte PartG mbB Schweigerstraße 2 81541 München (DE)**

(54) **LEITUNGSANORDNUNG ZUR MASSEVERTEILUNG IM FAHRZEUG**

(57) Die Erfindung betrifft eine Leitungsanordnung (100) zur elektrischen Masseverteilung in einem Fahrzeug sowie ein Bordnetz mit einer solchen Leitungsanordnung. Ein Ausführungsbeispiel der Leitungsanordnung (100) weist eine Vielzahl von unisolierten elektrischen Leitungen (110) auf. Die Vielzahl von unisolierten elektrischen Leitungen (110) weist jeweils ein erstes Ende (111) und ein zweites Ende (112) auf. Das erste Enden (111) der Vielzahl von unisolierten elektrischen Leitungen (110) ist jeweils mit einer elektrischen Komponente einer Vielzahl von elektrischen Komponenten ($V_1$-$V_n$) verbunden. Das zweite Ende (112) der Vielzahl von unisolierten Leitungen (110) bildet einen zusammengeführten Endabschnitt (101) der Leitungsanordnung (100), welcher mit einem elektrischen Bezugspotential (102) elektrisch verbunden ist.

Figur 2

**Beschreibung**

Die Erfindung betrifft eine Leitungsanordnung zur elektrischen Masseverteilung in einem Fahrzeug sowie ein Bordnetz mit einer solchen Leitungsanordnung.

Die Stromversorgung von Bauteilen in einem Bordnetz unterliegt verschiedenen Limitierungen. Aufgrund der immer größer werdenden Anzahl von Sensoren, Steuergeräten, Anzeigeelementen etc., besteht die Stromversorgung aus einem weitverzweigten Netz von Leitern, Adern, Litzen, Kabeln oder Ähnlichem. Nicht nur die Spannungs- und Stromversorgung der beispielhaft aufgezählten Komponenten bedarf einer aufwändigen Verdrahtung. Aufgrund der weitverzweigten Netzstruktur ist die Verdrahtung aller elektrischen Komponenten mit einem gemeinsamen elektrischen Potential ein aufwändiges Unterfangen. Die Rückführung und Zusammenführung einzelner Masse-Leiter, die ausgehend von den elektrischen Komponenten sich in einem gemeinsamen Kabelbaum vereinen, wird üblicherweise durch isolierte Leiter (üblicherweise isolierte Kupferlitzen) über Kaskaden von sogenannten Spliceverbindungen / Spleißverbindungen realisiert. Es ergibt sich eine Baumstruktur mit Verzweigungen zu den jeweiligen Teilnehmern. Die Kaskaden von Spliceverbindungen bedürfen einer Abisolierung der einzelnen isolierten Masse-Leiter. Damit steigt der Verdrahtungsaufwand stetig, je verzweigter die Netzstruktur ausgebildet ist. Zudem ist der Abisolierungsaufwand erheblich. Ferner ist der Verbindungsaufwand an den Splicestellen / Spleißstellen erheblich.

Die JP2020170642A betrifft im Allgemeinen Verbindungstechniken und offenbart im Speziellen einzelisolierte Litzen und deren Verbindungstechnik, welche eine Impedanzerhöhung bei höheren Frequenzen minimieren oder verhindern (Skin Effekt).

Aufgrund der immer komplexer strukturierten Bordnetze besteht ein Bedarf nach einer einfachen Masseverteilung. Insbesondere besteht ein Bedarf nach einer Masseverteilung, die ohne Kaskaden von Spliceverbindungen auskommt.

Gemäß einem ersten Aspekt wird eine Leitungsanordnung zur elektrischen Masseverteilung in einem Fahrzeug vorgeschlagen. Die Leitungsanordnung weist eine Vielzahl von unisolierten elektrischen Leitungen auf. Die Vielzahl von unisolierten elektrischen Leitungen weist jeweils ein erstes Ende und ein zweites Ende auf. Anders ausgedrückt, die unisolierten elektrischen Leitungen der Vielzahl von unisolierten elektrischen Leitungen weisen jeweils ein erstes Ende und ein zweites Ende auf. Das erste Ende der Vielzahl von unisolierten elektrischen Leitungen ist jeweils mit einer elektrischen Komponente der Vielzahl von elektrischen Komponenten verbunden (elektrisch verbunden). Anders ausgedrückt, die ersten Enden der Vielzahl von unisolierten elektrischen Leitungen sind jeweils mit einer elektrischen Komponente der Vielzahl von elektrischen Komponenten verbunden. Das zweite Ende der Vielzahl von unisolierten elektrischen Leitungen ist zusammengeführt und bildet einen zusammengeführten Endabschnitt der Leitungsordnung. Anders ausgedrückt, die zweiten Enden der unisolierten elektrischen Leitungen der Vielzahl von unisolierten elektrischen Leitungen sind zusammengeführt und bilden einen zusammengeführten Endabschnitt der Leitungsanordnung. Der zusammengeführte Endabschnitt ist mit einem elektrischen Bezugspotential elektrisch verbunden oder verbindbar. Bei dem elektrischen Bezugspotential / Referenzpotential kann es sich um ein gemeinsames Massepotential oder Erdpotential der Vielzahl von elektrischen Komponenten handeln.

Mittels der Leitungsanordnung zur Masseverteilung kann Installationsaufwand verringert werden. Dies gilt insbesondere da eine Leitungsisolation und/oder ein aufwändiger Abisolierprozess bei bereits bei Einbau oder Installation unisolierten elektrischen Leitungen entfällt. Dadurch wird der Verdrahtungsaufwand und/oder Materialaufwand minimiert. Insgesamt wird eine vereinfachte Verdrahtung der elektrischen Komponenten mit einem gemeinsamen elektrischen Bezugspotential ermöglicht.

Auch wenn hierin teilweise nur kurz von Leitungen oder unisolierten Leitungen gesprochen wird, so sind darunter elektrische Leitungen oder unisolierte elektrische Leitungen zu verstehen. Unter unisoliert (oder alternativ nicht isoliert) kann hierbei verstanden werden, dass die unisolierten elektrischen Leitungen in einem bereits zumindest teilweise unisolierten Zustand in der Leitungsanordnung verbaut oder installiert werden. Ein aufwändiges Abisolieren der Leitungen kann daher entfallen. Mindestens eine, beispielsweise genau eine oder mehrere, der Vielzahl von unisolierten Leitungen kann jeweils komplett oder vollständig oder entlang ihrer gesamten Länge unisoliert sein. Insbesondere können alle Leitungen der Vielzahl von elektrischen Leitungen entlang ihrer gesamten Länge jeweils unisoliert sein, d.h. entlang ihrer gesamten Länge keine Isolation aufweisen oder frei von einer Isolation sein. Die unisolierten elektrischen Leitungen können auch als unisolierte elektrische Leiter bezeichnet werden. Die Leitungen können als Bezugspotential-Leitungen, Masseleitungen oder Masse-Leiter bezeichnet werden. Die Leitungen können jeweils Einzelleitungen aufweisen oder als Einzelleitungen ausgebildet sein.

Die Vielzahl von unisolierten elektrischen Leitungen kann zumindest abschnittsweise zumindest teilweise untereinander in elektrischem Kontakt stehen. Mindestens eine, beispielsweise genau eine, mehrere oder alle, der Vielzahl von unisolierten Leitungen kann genau einen Draht, beispielsweise einen Volldraht, aufweisen oder aus genau einem Draht, beispielsweise einem Volldraht, bestehen. Mindestens eine, beispielsweise genau eine, mehrere oder alle, der Vielzahl von unisolierten Leitungen kann mehrere Drähte, beispielsweise eine Litze / einen Litzenleiter mit mehreren Einzeldrähten, aufweisen oder aus mehreren Drähten, beispielsweise einer Litze / einem Litzenleiter mit mehreren Einzeldrähten, bestehen. Anders ausgedrückt, mindestens eine Leitung der Vielzahl von Leitungen kann als unisolierter Volldraht oder als unisolierte Litzenleitung ausgebildet sein. Die Vielzahl von unisolierten elektrischen Leitungen kann folglich eine Vielzahl von unisolierten elektrischen Volldrähten und/oder eine Vielzahl von unisolierten elektrischen Litzen/Litzenleitern aufweisen. Unter einer unisolierten Litze / einem unisolierten elektrischen Litzenleiter kann verstanden werden, dass nicht nur die Einzeldrähte der Litze / des Litzenleiters unisoliert sind, sondern die aus den Einzeldrähten gebildete Litze (der aus den Einzeldrähten gebildete Litzenleiter) zumindest teilweise unisoliert ist, beispielsweise entlang ihrer (seiner) gesamten Länge unisoliert ist. Die elektrischen Leitungen können beispielsweise als Kupferleitungen ausgebildet sein. Die Leitungsanordnung kann auch als Leiteranordnung oder Drahtanordnung bezeichnet werden.

Die Vielzahl von unisolierten elektrischen Leitungen kann durchgängig von der Vielzahl von elektrischen Komponenten zu dem elektrischen Bezugspotential führen. Dabei kann unter durchgängig verstanden werden, dass die unisolierten elektrischen Leitungen ununterbrochen oder ohne Unterbrechung oder in unveränderter Form von der Vielzahl von elektrischen Komponenten zu dem elektrischen Bezugspotential führen. Mit anderen Worten, die Verbindung zwischen einer oder mehrerer der elektrischen Komponenten und dem elektrischen Bezugspotential ist beispielsweise auf der gesamten Strecke nicht getrennt. Beispielsweise können die unisolierten elektrischen Leitungen mit jeweils unverändertem Querschnitt von der Vielzahl von elektrischen Komponenten zu dem elektrischen Bezugspotential führen. Gemäß einem Beispiel kann die Verbindung zwischen einer oder mehrerer der elektrischen Komponenten und einem elektrischen Bezugspotential mittels der Leitungsanordnung ohne Verbindungen auskommen, z. B. frei von Klemmverbindungen oder Spliceverbindungen sein (verbindungsfrei, z. B. klemmverbindungsfrei oder splicefrei sein).

Spliceverbindunden / Spleißverbindungen können mit Hilfe verschiedener Verbinder hergestellt werden, wie beispielsweise Kabelspleißverbindern, Abzweigverbindern oder entsprechenden Kabelverbindern. Als Spleißen kann eine spezielle Art der Verbindung elektrischer Leitungen verstanden werden. Spleißstellen werden zum Schutz vor äußeren Einflüssen häufig in Muffen oder ähnlichen Schutzvorrichtungen untergebracht. Insbesondere können Spleißverbindungen als dauerhafte und/oder nicht lösbare Verbindungen ausgestaltet sein. Unter nicht lösbar kann dabei beispielsweise verstanden werden, dass die jeweilige Verbindung nicht gelöst werden kann, ohne sie zu beeinflussen oder zu zerstören oder deren Funktion zu beeinflussen oder zu zerstören. Insbesondere werden zur Herstellung von Spleißverbindungen isolierte Leitungen üblicherweise teilweise, z. B. an ihren Enden, abisoliert und an dem oder den abisolierten Abschnitten miteinander verbunden.

Im Vergleich zu Kaskaden von Spliceverbindungen aus dem Stand der Technik entfällt somit Material und/oder Arbeitsaufwand. Durch Wegfall der Spliceverbindungen kann zusätzlich Material eingespart werden, welches üblicherweise für die Verbindung zweier abisolierter Leiterenden nötig ist. Zugleich verringert sich durch den Wegfall von Spliceverbindungen der Montageaufwand. Ferner werden durch die vereinfachte Verdrahtung potentielle Fehlerquellen eliminiert, womit die Zuverlässigkeit der Masseverteilung verbessert wird. Durch Spliceverbindungen zwischen elektrischen Leitungen gemäß dem Stand der Technik entstehen Unterbrechungen. An diesen Unterbrechungen werden Leitungen jeweils abisoliert und miteinander verbunden. Dies bedeutet Arbeitsaufwand durch Abisolierung und Verbindung der Leitungen. Ferner verändert sich durch die Verbindung der Querschnitt der aus den Leitungen gebildeten Gesamtleitung nach der Unterbrechung oder Verbindungsstelle.

Die Leitungsanordnung kann mindestens eine mit dem elektrischen Bezugspotential verbundene Führungseinrichtung aufweisen. Die mindestens eine Führungseinrichtung kann derart ausgebildet sein, dass mindestens eine der Vielzahl von unisolierten Leitungen hindurchführbar ist oder hindurchgeführt ist. Die mindestens eine Führungseinrichtung kann auf dem gleichen Potential liegen wie das elektrische Bezugspotential, d. h. das gleiche Potential haben. Die mindestens eine Führungseinrichtung kann derart ausgebildet sein, dass mehrere, beispielsweise alle, der Vielzahl von unisolierten Leitungen hindurchführbar sind oder hindurchgeführt sind. Die mindestens eine Führungseinrichtung kann als Halteeinrichtung ausgebildet sein oder eine Halteeinrichtung aufweisen, die ausgebildet ist, die mindestens eine der Vielzahl von unisolierten Leitungen zu halten oder zu tragen. Auf diese Weise kann durch die Halteeinrichtung eine mechanische Stabilisierung der mindestens einen der Vielzahl von unisolierten Leitungen erreicht werden. Dabei kann die Halteeinrichtung ausgebildet sein, die mindestens eine der Vielzahl von unisolierten Leitungen derart zu halten, dass sie in Kontakt mit der mindestens einen der Vielzahl von unisolierten Leitungen ist / kommt. Durch die Kontaktierung kann ein Potentialausgleich stattfinden. Ferner kann die Halteeinrichtung einen derartigen Druck auf die durch sie geführten Leitungen ausüben, dass diese Leitungen miteinander in Kontakt kommen. Auf diese Weise kann der Potentialausgleich zwischen den Leitungen durchgeführt oder verbessert werden.

Durch die mindestens eine Führungseinrichtung kann eine Führung der Leitungen der Leitungsanordnung erreicht werden. Mittels der Halteeinrichtung kann an ausgewählten Bereichen oder Punkten / Stellen eine mechanische Stabilisierung der Leitungsanordnung erfolgen. Zudem kann ein Potentialausgleich durch die mindestens eine / an der mindestens einen Halteeinrichtung durchgeführt werden, um elektrische Störungen zu vermeiden. Mittels der Halteeinrichtung können Leitungen abschnittsweise, z. B. an der Halteeinrichtung, miteinander in Kontakt kommen.

Die Vielzahl von unisolierten elektrischen Leitungen kann mindestens eine Gruppe mit unisolierten elektrischen Leitungen aufweisen. Die unisolierten elektrischen Leitungen der mindestens eine Gruppe können zu mindestens einer Komponentengruppe mit mindestens einer elektrischen Komponente der Vielzahl von elektrischen Komponenten führen. Die unisolierten elektrischen Leitungen der mindestens eine Gruppe können beispielsweise zu gemeinsam verorteten elektrischen Komponenten der Vielzahl von elektrischen Komponenten führen. Unter gemeinsam verortet ist dabei nicht zwingend zu verstehen, dass die gemeinsam verorteten elektrischen Komponenten sich an ein und derselben Stelle befinden. Vielmehr kann darunter verstanden werden, dass sich die gemeinsam verorteten elektrischen Komponenten in der Nähe oder in einem gemeinsamen Bereich oder in einer ähnlichen Richtung befinden.

Die mindestens eine Gruppe mit unisolierten elektrischen Leitungen kann durch die mindestens eine Führungseinrichtung gebildet werden. Beispielsweise können eine oder mehrere unisolierte elektrische Leitungen der Vielzahl von unisolierten elektrischen Leitungen durch eine der mindestens einen Führungseinrichtung geführt werden, um die Gruppe mit unisolierten elektrischen Leitungen zu bilden.

Die Vielzahl von unisolierten elektrischen Leitungen kann mehrere Gruppen von unisolierten Leitungen aufweisen oder bilden. Die unisolierten elektrischen Leitungen einer ersten der mehreren Gruppen können zu einer ersten Komponentengruppe mit ersten elektrischen Komponenten der Vielzahl von elektrischen Komponenten führen. Die unisolierten elektrischen Leitungen einer zweiten der mehreren Gruppen können zu einer zweiten Komponentengruppe mit zweiten elektrischen Komponenten der Vielzahl von elektrischen Komponenten führen. Die unisolierten elektrischen Leitungen einer ersten der mehreren Gruppen können zu gemeinsam verorteten ersten elektrischen Komponenten der Vielzahl von elektrischen Komponenten führen. Die unisolierten elektrischen Leitungen einer zweiten der mehreren Gruppen können zu gemeinsam verorteten zweiten elektrischen Komponenten der Vielzahl von elektrischen Komponenten führen.

Die mehreren Gruppen mit unisolierten elektrischen Leitungen können z. B. durch mehrere Führungseinrichtungen gebildet werden. Beispielsweise können eine oder mehrere erste unisolierte elektrische Leitungen der Vielzahl von unisolierten elektrischen Leitungen durch eine erste der mehreren Führungseinrichtungen geführt werden, um eine erste Gruppe mit unisolierten elektrischen Leitungen zu bilden. Ferner können eine oder mehrere zweite unisolierte elektrische Leitungen der Vielzahl von unisolierten elektrischen Leitungen durch eine zweite der mehreren Führungseinrichtungen geführt werden, um eine zweite Gruppe mit unisolierten elektrischen Leitungen zu bilden.

Durch die Führungseinrichtungen, mit oder ohne Halteeinrichtungen, kann ein Abzweigen/Auffächern/Aufteilen von Leitungen Gruppen/einer Gruppe erreicht werden. Ferner kann eine Stabilisierung an den Abzweigungen erfolgen. Die Leitungen jeder Gruppen können (jeweils) mit einer elektrischen Komponentengruppe elektrisch verbunden sein.

Die Vielzahl von unisolierten elektrischen Leitungen kann, wie beschrieben, in eine oder mehrere Gruppen von unisolierten elektrischen Leitungen gruppiert/aufgeteilt werden. Anders ausgedrückt, die Vielzahl von unisolierten elektrischen Leitungen kann in Gruppen von unisolierten elektrischen Leitungen gruppiert/aufgeteilt und/oder zu einer einzelnen Gruppe zusammengefasst werden. Dabei kann eine Gruppe der einen oder mehreren Gruppen zumindest eine unisolierte elektrische Leitung der Vielzahl von unisolierten elektrischen Leitungen aufweisen. Die Gruppierung/Aufteilung kann entlang der Leitungsanordnung an unterschiedlichen und/oder an mehreren Bereichen erfolgen. Die Bereiche können zwischen zumindest einem ersten Ende der Vielzahl von unisolierten elektrischen Leitungen und dem zusammengeführten Endabschnitt liegen. Beispielsweise können unisolierte elektrische Leitungen $k$, die mit gemeinsam verorteten elektrischen Komponenten elektrisch verbunden sind, mit weiteren unisolierten elektrischen Leitungen $l$, die mit anderen gemeinsam verorteten elektrischen Komponenten elektrisch verbunden sind, zu einer Gruppe von $l+k$ unisolierten elektrischen Leitungen zusammengefasst werden. Diese Art der Zusammenfassung kann, z. B. mittels einer oder mehrerer der oben genannte Führungseinrichtungen, entlang der jeweiligen Leitung(en) bis zu dem zusammengeführten Endabschnitt wiederholt werden. Der zusammengeführte Endabschnitt kann eine Gruppe von n unisolierten elektrischen Leitungen aufweisen, wobei $n$ der Vielzahl von unisolierten elektrischen Leitungen entspricht. Das heißt, beginnend mit einer elektrischen Komponente, kann ein (Bereichs-)Querschnitt der Leitungsanordnung bis zum zusammengeführten Endabschnitt zunehmen. Am zusammengeführten Endabschnitt kann der (Bereichs-)Querschnitt einen maximalen Querschnitt von

$$Q_m = \sum Q_n \, . \quad (1)$$

erreichen. Dabei bezeichnet $Q_n$ den jeweiligen Querschnitt einer Leitung. Ferner bezeichnet $Q_m$ den Querschnitt des zusammengeführten Endabschnitts. $Q_m$ kann hierbei der Querschnittsumme der Vielzahl von unisolierten Leitungen entsprechen. Der zusammengeführte Endabschnitt kann den Anfang eines Bündels einer Vielzahl von unisolierten elektrischen Leitungen bilden. Von diesem Bündel kann eine einzelne Gruppe oder Gruppen von unisolierten elektrischen Leitern zu gemeinsam verorteten elektrischen Komponenten abgeleitet/abgezweigt werden. Die Leitungsanordnung kann sich beginnend vom zusammengeführten Endabschnitt, zu verschieden verorteten elektrischen Komponenten auffächern.

Dies hat im Vergleich zur Realisierung mit Kaskaden von Spliceverbindungen den Vorteil, dass an jedem Bereich der Drahtanordnung der lastoptimale Querschnitt der Leitungsanordnung bereitgestellt wird, welcher der jeweiligen Lastsituation in diesem Bereich entspricht.

Wie oben beschrieben, können die Gruppen von unisolierten elektrischen Leitungen jeweils zu gemeinsam verorteten elektrischen Komponenten geführt werden. Gemeinsam verortete elektrische Komponenten können als Komponentengruppe bezeichnet werden. Eine elektrische Komponentengruppe kann zumindest eine elektrische Komponente umfassen. Eine Vielzahl von unisolierten elektrischen Leitungen kann von mindestens einer Führungseinrichtung, wie z. B. mindestens einer Halteeinrichtung, zu Gruppen/einer Gruppe von unisolierten Leitungen zusammengefasst werden. Die Gruppen/Gruppe von unisolierten Leitungen kann/können zu (einer) elektrischen Komponentengruppe(n) führen. Diese Gruppierung kann durch mindestens eine Führungseinrichtung, z. B. mit mindestens eine Halteeinrichtung und/oder ohne Halteeinrichtung, erfolgen. Die Halteeinrichtung kann als Quetschverbinder oder Schelle oder Klemme oder Binder oder Manschette ausgestaltet sein oder eine derartige Einrichtung aufweisen. Die Führungseinrichtungen, mit oder ohne Halteeinrichtung, können einen Teil der Vielzahl der unisolierten elektrischen Leitungen gruppieren. Die Führungseinrichtungen, mit oder ohne Halteeinrichtung, können einen Teil der Vielzahl von unisolierten elektrischen Leitungen zu losen Bündeln zusammenfassen. Die Führungseinrichtungen, mit oder ohne Halteeinrichtung, können an ausgewählten Bereichen einen Teil der Vielzahl an unisolierten Leitungen zu losen Bündeln zusammenfassen. Die Bereiche/der Bereich können/kann zwischen zumindest einem ersten Ende der Vielzahl von unisolierten elektrischen Leitungen und dem zusammengeführten Endabschnitt liegen. Eine Gruppierung ohne Halteeinrichtung kann durch räumliche Trennung zwischen zumindest zwei Gruppen erfolgen. Halteinrichtung(en) kann/können beispielsweise spleißfrei / ohne Spleißverbindung ausgestaltet sein. Die Halteeinrichtung(en) kann/können als Spliceverbindungen / Spleißverbindungen inline gelegt werden, also zwischen zumindest einem ersten Ende der Vielzahl von unisolierten elektrischen Leitungen und dem zusammengeführten Endabschnitt. Die Spliceverbindungen können durch Krimpen, US-Schweißen oder Widerstandsschweißen gesetzt werden.

Gesehen von der Seite der elektrischen Komponenten können beispielsweise eine erste Komponentengruppe von elektrischen Komponenten gemeinsam verortet sein und eine zweite Komponentengruppe von elektrischen Komponenten gemeinsam verortet sein. Auch können die elektrischen Komponenten der ersten Komponentengruppe und die elektrischen Komponenten der zweiten Komponentengruppe räumlich unterschiedlich verortet sein. Mehrere erste Leitungen können von den elektrischen Komponenten der ersten Komponentengruppe wegführen. Mehrere zweite Leitungen können von den elektrischen Komponenten der zweiten Komponentengruppe wegführen. An einer Stelle können die Leitungen der ersten Komponentengruppe und die Leitungen der zweiten Komponentengruppe, beispielsweise mittels einer Führungseinrichtung, in einem Endabschnitt zusammengeführt werden. Es können mehr als zwei Komponentengruppen vorgesehen sein.

Die Gruppierung mit Führungseinrichtungen beispielsweise mit Halteeinrichtungen, hat den Vorteil, dass an ausgewählten Bereichen eine Stabilisierung der Leitungsanordnung erfolgt, sowie ein Potentialausgleich, um elektrische Störungen zu vermeiden. Zusätzlich kann durch die Führungseinrichtungen ein Abzweigen/Auffächern/Aufteilen von Gruppen/einer Gruppe erfolgen, die (jeweils) mit einer elektrischen Komponentengruppe elektrisch verbunden sind/ist.

Die Leitungsanordnung kann zumindest eine zusätzliche unisolierte elektrische Leitung aufweisen. Enden der zumindest einen zusätzlichen unisolierten elektrischen Leitung können jeweils mit einer elektrischen Komponente verbindbar oder verbunden sein. Die zumindest eine zusätzliche unisolierte elektrische Leitung kann zwischen das erste Ende und das zweite Ende der Vielzahl von unisolierten elektrischen Leitungen eingebracht sein. Die zumindest eine zusätzliche unisolierte elektrische Leitung kann unter einem Nutzungsverhältnis zwischen das erste Ende und das zweite Ende der Vielzahl von unisolierten elektrischen Leitungen eingebracht sein. Das Nutzungsverhältnis kann ein betriebsbedingtes Nutzungsverhältnis sein.

Anders ausgedrückt, die zumindest eine zusätzlich unisolierte Leitung kann unter einem betriebsbedingten Nutzungsverhältnis in die Vielzahl der unisolierten elektrischen Leitungen integriert sein/werden. Die Leitungsenden der zumindest einen zusätzlichen unisolierten Leitung können mit jeweils einer elektrischen Komponente elektrisch verbunden sein.

Beispielsweise kann unter Annahme eines betriebsbedingten Nutzungsverhältnisses $\mu$ (engl. Duty cycles) zumindest eine zusätzliche unisolierte elektrische Leitung in/an die Leitungsanordnung fixiert/integriert/eingefügt werden. Die Leitungsenden der zusätzlichen unisolierten elektrischen Leitung können mit jeweils einer elektrischen Komponente verbunden sein. Es kann nur ein Leitungsende der zusätzlichen unisolierten Leitung mit einer elektrischen Komponente verbunden sein und das andere Ende kann nicht mit einer elektrischen Komponente verbunden oder unverbunden sein. Beispielsweise kann als betriebsbedingtes Nutzungsverhältnis eine mittlere Strombelastung erreicht sein/werden, z. B. kann eine elektrische Komponente, wie ein Blinker, nur zu 50% den eigentlichen Nennstrom ziehen, so dass in diesem Fall die mittlere Strombelastung zu einem Bezugspotential / Referenzpotential, z. B. einem Massepunkt, nur die Hälfte des Nennstroms beträgt. Dazu kann die elektrische Stromversorgung der elektrischen Komponente(n) pulsweitenmoduliert werden / mittels Pulsweitenmodulation moduliert werden. Das Verhältnis von Impulsdauer zu Periodendauer kann bei der Pulsweitenmodulation bestimmen, welche mittlere Strombelastung zu einem Bezugspotential/Referenzpotential erreicht wird. Bei einem Verhältnis von 0,5 kann die mittlere Strombelastung 50% des eigentlichen Nennstroms betragen. Bei einem Verhältnis von 0,5 kann die elektrische Komponente zu 50% der Betriebszeit den Nennstrom ziehen. Wenn die elektrische Komponente zu 50% der Betriebszeit den Nennstrom ziehen kann, zieht die elektrische Komponenten 50% des Nennstroms.

Die zusätzliche unisolierte elektrische Leitung kann in U-Form an/in die bestehende Leitungsanordnung fixiert/integriert/eingefügt werden. Die zusätzliche unisolierte elektrische Leitung kann an ihrer Mitte mit/an die bestehende Leitungsanordnung fixiert/integriert/eingefügt werden. Das Fixieren/Integrieren/Einfügen kann zwischen zumindest einem ersten Ende der Vielzahl von unisolierten elektrischen Leitungen und dem zusammengeführten Endabschnitt erfolgen. Der Querschnitt der Leitungsanordnung in diesem Bereich, in dem der zusätzliche isolierte Draht fixiert/integriert/eingefügt werden kann, ergibt sich zu:

$$Q_m = \sum_i \mu Q_{ri} + \mu(Q_A + Q_B) \quad (2)$$

Die zusätzliche unisolierte elektrische Leitung kann mittels einer Führungseinrichtung, mit oder ohne Halteeinrichtung, an/in die bestehende Leitungsanordnung fixiert/integriert/eingefügt werden. Die Halteeinrichtung kann als Quetschverbinder oder Schelle oder Klemme oder Binder oder Manschette ausgestaltet sein oder eine solche Einrichtung aufweisen. Das unverbundene Ende der zusätzlich fixierten/integrierten/eingefügten unisolierten elektrischen Leitung kann als elektrische Zusatzverbindung zu einer noch zu installierenden elektrischen Komponente dienen, oder als elektrische Ersatzverbindung zu einer bereits installierten elektrischen Komponente. Sollte die elektrische Verbindung des einen Endes der zusätzlich fixierten/integrierten/eingefügten unisolierten Leitung einen Mangel oder Fehler zu einer bereits installierten elektrischen Komponente aufweisen, kann mit dem unverbundenen Ende der zusätzlich fixierten/integrierten/eingefügten unisolierten Leitung eine erneute elektrische Verbindung zum gemeinsamen elektrischen Potential bereitgestellt werden. Die zusätzliche elektrische Leitung kann als zusätzliche Leitung ausgebildet sein.

Das Fixieren/Integrieren/Einfügen einer zusätzlichen unisolierten elektrischen Leitung an/in die bestehende Leitungsanordnung hat den Vorteil, dass eine schnellstmögliche Anpassung der bestehenden Leitungsanordnung auf zusätzlich installierte/montierte elektrischer Komponenten erfolgen kann. Des Weiteren können zusätzlich elektrische Komponenten, die in kurzer Zeit an/in die bestehende Leitungsanordnung installiert/montiert, womit eine zügige Verdrahtung zum gemeinsamen elektrischen Potential sichergestellt werden kann. Mit anderen Worten kann somit eine einfache Variantenanpassung durch Hinzufügen einzelner unisolierter Leitungen der Vielzahl unisolierter Leitungen erfolgen.

Die zusätzliche unisolierte elektrische Leitung kann an einem zentralen Abschnitt, beispielsweise an ihrer Mitte, über eine leitfähige Verbindung in die Leitungsanordnung integriert sein oder mit einer oder mehrerer der Vielzahl von unisolierten elektrischen Leitungen elektrisch verbunden sein.

Der zusammengeführte Endabschnitt kann beispielsweise mittels eines Kabelschuhs mit dem elektrischen Bezugspotential elektrisch verbunden sein. Das elektrische Bezugspotential kann ein gemeinsamer elektrischer Massepunkt für die Vielzahl elektronischer Komponenten sein. Der zusammengeführte Endabschnitt kann in/an einem Kabelschuh fixiert sein. Die Vielzahl von unisolierten elektrischen Leitungen kann über eine Aderhülse zusammengeführt werden, die nach Zusammenführung verpresst wird, um die Vielzahl von unisolierten elektrischen Leitungen zu fixieren. Wird der zusammengeführte Endabschnitt über eine Aderhülse ausgestaltet, kann die Aderhülse in einem Kabelschuh fixiert werden, der wiederrum mit dem gemeinsamen elektrischen Potential elektrisch verbunden wird. Das gemeinsame elektrische Potential kann ein gemeinsamer elektrischer Massepunkt sein, der als Massebolzen oder Masseschraube oder Masseanbindung ausgestaltet ist.

Gemäß einem zweiten Aspekt wird ein Bordnetz für ein Fahrzeug bereitgestellt. Das Bordnetz weist mehrere elektrische Komponenten und die Leitungsanordnung auf, wie sie hierin beschrieben wurde /wird. Die Leitungsanordnung zur Masseverteilung kann Teil eines Leitungssatzes mit weiteren Leitungen sein. Die Isolation zu anderen Leitungen kann durch deren Eigenisolation gegeben sein. Die Isolation zur Umgebung kann durch Leitungsbündelschutz sichergestellt werden.

Die vorliegende Erfindung soll anhand von Figuren weiter erläutert werden. Diese Figuren zeigen schematisch:

Figur 1    ein Ausführungsbeispiel einer Leitungsanordnung zur verbesserten Masseverteilung; und

Figur 2    eine Variante des Ausführungsbeispiels der Leitungsanordnung aus Figur 1 mit teilweiser Gruppierung der unisolierten Leitungen sowie die Integration einer zusätzlichen unisolierten Leitung in die bestehende Leitungsanordnung.

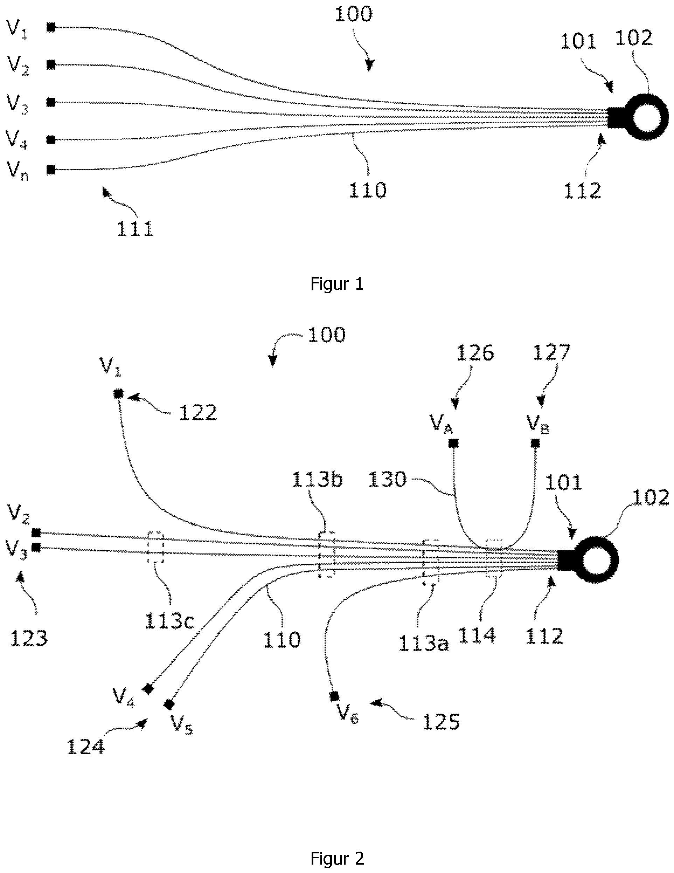

In Figur 1 ist schematisch eine Leitungsanordnung 100 gezeigt. Die Leitungsanordnung 100 weist eine Vielzahl von unisolierten elektrischen Leitungen 110 auf. In Figur 1 sind beispielhaft fünf unisolierte elektrische Leitungen 110 gezeigt. Es kann jedoch jede Anzahl an unisolierten elektrischen Leitungen 110 vorgesehen sein. Die unisolierten Leitungen 110 weisen jeweils ein erstes Ende 111 und ein zweites Ende 112 auf. Die ersten Enden 111 der Vielzahl von unisolierte elektrischen Leitungen 110 sind jeweils mit einer elektrischen Komponente einer Vielzahl von elektrischen Komponenten $V_1$-$V_n$ verbunden. Bei den elektrischen Komponenten $V_1$-$V_n$ kann es sich um Verbraucher oder Teilnehmer eines elektrischen Bordnetzes eines Fahrzeugs handeln. Die zweiten Enden 112 der Vielzahl von unisolierten Leitungen 110 sind zusammengeführt und bilden einen zusammengeführten Endabschnitt 101 der Leitungsanordnung 100. Dieser zusammengeführte Endabschnitt 101 ist mit einem elektrischen Bezugspotential 102 elektrisch verbindbar oder verbunden.

Wie in Figur 1 zu erkennen, ist die Vielzahl von unisolierten elektrischen Leitungen 110 durchgängig von der Vielzahl von elektrischen Komponenten $V_1$-$V_n$ zu dem elektrischen Bezugspotential 102 geführt. Es sind keine Unterbrechungen an den Leitungen 110 vorgesehen. Die Leitungen 110 sind während ihrer gesamten Länge unverändert. Insbesondere sind die jeweiligen Querschnitte der Leitungen 110 während ihrer gesamten Länge unverändert.

In Figur 2 ist eine Variante der Ausführungsform der Leitungsanordnung 100 aus Figur 1 zu sehen. Wie in Bezug auf Figur 1 skizziert, sind die zweiten Enden 112 der Vielzahl von unisolierten elektrischen Leitungen 110 zusammengeführt und bilden einen zusammengeführten Endabschnitt 101 der Leitungsanordnung 100. Dieser zusammengeführte Endabschnitt 101 ist mit einem elektrischen Bezugspotential 102 elektrisch verbindbar oder verbunden. Die elektrischen Komponenten $V_1$-$V_n$ sind bei der Variante gemäß Figur 2 beispielhaft als elektrische Komponenten $V_1$-$V_6$ bezeichnet und auf/in vier Komponentengruppen 122, 123, 124, 125 aufgeteilt. Eine erste Komponentengruppe 122 weist beispielhaft lediglich eine einzige elektrische Komponente $V_1$ auf. Eine zweite Komponentengruppe 123 weist beispielhaft zwei elektrische Komponenten $V_2$, $V_3$ auf. Eine dritte Komponentengruppe 124 weist beispielhaft zwei elektrische Komponenten $V_4$, $V_5$ auf. Eine vierte Komponentengruppe 125 weist beispielhaft eine einzige elektrische Komponente $V_6$ auf. Die elektrischen Komponenten $V_1$-$V_6$ der Komponentengruppen 122, 123, 124, 125 sind in der Figur 2 jeweils mit zumindest einem der ersten Enden der Vielzahl von unisolierten Leitungen 110 elektrisch verbunden.

Die Leitungsanordnung 100 weist in Figur 2 Führungseinrichtungen 113a, 113b, 113c, 114 auf. Die Führungseinrichtungen 113a, 113b, 113c, 114 sind an unterschiedlichen Stellen entlang der Leitungen 110 zwischen den jeweiligen ersten Enden 111 und zweiten Enden 112 vorgesehen, und damit zwischen den elektrischen Komponenten $V_1$-$V_6$ und dem Bezugspotential 102. Die Führungseinrichtungen 113a, 113b, 113c, 114 sind zum einen ausgebildet, dass die Leitungen 110 oder eine Untermenge der Leitungen 110 durch sie hindurchgeführt werden können. Zudem können die Führungseinrichtungen 113a, 113b, 113c, 114 Halteeinrichtungen oder kurz Halter aufweisen. Die Halter können die Leitungen 110 mechanisch stabilisieren. Die Halter können dazu ausgebildet sein, beispielsweise mit den Leitungen 110 in Kontakt zu treten oder die Leitungen 110 zu kontaktieren. Ferner können die Halter eine Klemmfunktion aufweisen oder eine Klemmeinrichtung aufweisen, mit der die Leitungen 110 zusammengedrückt oder geklemmt werden können. Durch den ausgeübten Druck oder das Klemmen der Leitungen 110 kommen die Leitungen 110 miteinander in Kontakt. Dies erhöht die mechanische Stabilisierung und den Potentialausgleich der Leitungen 110. Die Halter verbinden jedoch die Leitungen 110 beispielsweise nicht unlösbar oder dauerhaft miteinander.

Ferner kann die Figur 2 als Variante eines Ausführungsbeispiels wie folgt beschrieben werden. Die Führungseinrichtungen 113a, 113b, 113c und 114 können als elektrische Verbinder ausgestaltet sein und dementsprechend als elektrische Verbinder 113a, 113b, 113c, 114 bezeichnet werden. Die elektrischen Verbinder 113a, 113b, 113c, 114 können durch Krimpen oder US-Schweißen (Ultraschall-Schweißen) oder Widerstandsschweißen oder andere kraft- und / oder stoffschlüssige Verbindungsverfahren gesetzt werden. Die elektrischen Verbinder 113a, 113b, 113c, 114 sind an unterschiedlichen Stellen entlang der Leitungen 110 zwischen den jeweiligen ersten Enden 111 und zweiten Enden 112 vorgesehen, und damit zwischen den elektrischen Komponenten $V_1$-$V_6$ und / oder $V_a$ und $V_b$ und dem Bezugspotential 102. Die elektrischen Verbinder 113a, 113b, 113c, 114 sind zum einen ausgebildet, dass die Leitungen 110 oder eine Untermenge der Leitungen 110 durch sie hindurchgeführt werden können. Zudem können die elektrischen Verbinder Halter aufweisen, die z. B. als Kurzschlussverbinder ausgestaltet sind. Durch die Kurzschlussverbinder kann sichergestellt werden, dass die Vielzahl der unisolierten Leiter und/oder eine Untermenge der Vielzahl unisolierter Leiter sich untereinander zumindest sporadisch berühren. Damit werden elektrische Effekte zwischen den einzelnen Leitungen, die aufgrund von Spannungsdifferenzen entstehen, verhindert. Ferner können die Kurzschlussverbinder eine Klemmfunktion aufweisen, mit der die Leitungen 110 zusammengedrückt oder geklemmt werden. Durch den ausgeübten Druck kann sichergestellt werden, dass die Leitungen 110 untereinander in Kontakt kommen. Mit anderen Worten, die Leitungen 110 können untereinander dasselbe Potential haben, da die Leitungen 110 untereinander kurzgeschlossen sind. Da die Leitungen untereinander kurzgeschlossen sind, ist sichergestellt, dass die Vielzahl an Leitungen 110 entlang der Leitungsanordnung 100 dasselbe elektrische Potential aufweisen. Die Halter verbinden jedoch die Leitungen 110 beispielsweise nicht unlösbar oder dauerhaft miteinander.

Die Vielzahl von unisolierten Leitungen 110 ist in Figur 2 beispielhaft in Gruppen von unisolierten Leitungen gruppiert/aufgeteilt. Die beispielhafte Aufteilung erfolgt in Figur 2 mittels der Führungseinrichtungen 113a, 113b, 113c, 114. Ferner sind beispielhaft die unisolierten Leitungen 110, die mit den elektrischen Komponenten der elektrischen Komponentengruppen 122, 123, 124, 125 elektrisch verbunden sind, mittels Führungseinrichtungen 113a, 113b, 113c, 114 aufgeteilt.

Elektrische Komponentengruppen 122, 123, 124, 125 sind in einem Bordnetz teilweise nicht gemeinsam verortet. Zu diesem Zweck können sich aus einer Gruppe von unisolierten Leitungen 110 weitere Gruppen von unisolierten Leitungen 110 auffächern oder aufteilen, die dann jeweils zu unterschiedlich verorteten elektrischen Komponentengruppen 122, 123, 124, 125 führen. In Figur 2 sind beispielhaft zwei Gruppen unisolierter Leitungen 110 durch eine Führungseinrichtung 113a gebildet oder aufgeteilt. Die eine Gruppe unisolierter Leitungen 110 (im Beispiel von Figur 2 lediglich eine einzige Leitung 110) führt zu der Komponentengruppe 125 und damit zu der elektrischen Komponente $V_6$. Die andere Gruppe unisolierter Leitungen 110 führt zu den Komponentengruppen 122, 123, 124. Ausgehend von der Führungseinrichtung 113b führen drei Gruppen von unisolierten Leitungen 110 zu jeweils einer Komponentengruppe 122, 123, 124. Eine Gruppe mit einer Leitung 110 führt zu der Komponentengruppe 122 und damit der elektrischen Komponente $V_1$. Eine Gruppe mit zwei Leitungen führt zu der Komponentengruppe 123 und damit zu den Komponenten $V_2$, $V_3$. Eine Gruppe mit zwei Leitungen führt zu der Komponentengruppe 124 und damit zu den Komponenten $V_4$, $V_5$.

Die Gruppierung/Aufteilung kann entlang der Leitungsanordnung 100 an mehreren Stellen oder Bereichen erfolgen, wobei die Stellen oder Bereiche zwischen zumindest einem der ersten Enden 111 der Vielzahl von unisolierten Leitungen 100 und dem zusammengeführten Endabschnitt 101 liegen. Die Führungseinrichtung 113c befindet sich zwischen den ersten Enden 111 der Vielzahl von unisolierte Leitungen 110 und dem zusammengeführten Endabschnitt 101. Die Führungseinrichtung 113b befindet sich zwischen der Führungseinrichtung 113c und dem zusammengeführten Endabschnitt 101. Die Führungseinrichtung 113a befindet sich zwischen der Führungseinrichtung 113b und dem zusammengeführten Endabschnitt 101.

In der Variante des Ausführungsbeispiels gemäß Figur 2 ist eine zusätzliche unisolierte Leitung 130 vorgesehen, die in die Leitungsanordnung 100 integriert ist. Unter der Annahme eines betriebsbedingten Nutzungsverhältnisses (engl. Duty-cycle) kann zumindest die zusätzliche unisolierte Leitung 130 in die Leitungsanordnung 100 integriert werden. Im Falle von Testzwecken, bei denen elektrische Komponenten nur temporär in ein Bordnetz verbaut werden sollen, kann über die zusätzliche unisolierte Leitung 130 eine schnelle Verdrahtung oder ein schneller Masseanschluss von zusätzlichen elektrischen Komponenten $V_A$, $V_B$ erreicht werden. Im Ausführungsbeispiel in Figur 2 sind die Leitungsenden der zusätzlichen unisolierten Leitung 130 mit jeweils einer elektrischen Komponente $V_A$, $V_B$ (bezeichnet auch über Komponentengruppen 126, 127 in Figur 2) verbunden. Die zusätzliche unisolierte Leitung 130 ist im Ausführungsbeispiel in U-Form in die bestehende Leitungsanordnung 100 integriert. Die zusätzliche unisolierte Leitung 130 ist an ihrer Mitte über eine Klemme/Schelle 114 oder eine Führungseinrichtung an die bestehende Leitungsanordnung fixiert. Das Integrieren der zusätzlichen unisolierten Leitung in die bestehende Leitungsanordnung 100 erfolgt in Figur 2 zwischen den ersten Enden 111 der Vielzahl von unisolierten Leitungen 110 und dem zusammengeführten Endabschnitt 101. Alternativ könnte die zusätzliche unisolierte Leitung 130 anstatt über die Klemme/Schelle 114 über die Führungseinrichtung 113a an die Leitungsanordnung 100 fixiert sein. In diesem Fall umfasst die Gruppe im Bereich der Führungseinrichtung 113a fünf unisolierte Leitungen und eine zusätzliche unisolierte Leitung 130. Der Querschnitt der Leitungsanordnung an diesem Bereich ergibt sich aus der Formel (2) für fünf unisolierte Leitungen und eine zusätzlichen unisolierten Leitung.

In einer weiteren Variante des Ausführungsbeispiels gemäß Figur 2 ist eine zusätzliche unisolierte Leitung 130 vorgesehen, die in die Leitungsanordnung 100 integriert ist. Unter der Annahme eines betriebsbedingten Nutzungsverhältnisses (engl. Duty-cycle) kann zumindest die zusätzliche unisolierte Leitung 130 in die Leitungsanordnung 100 integriert werden. Im Falle von Testzwecken, bei denen elektrische Komponenten nur temporär in ein Bordnetz verbaut werden sollen, kann über die zusätzliche unisolierte Leitung 130 eine schnelle Verdrahtung oder ein schneller Masseanschluss von zusätzlichen elektrischen Komponenten $V_A$, $V_B$ erreicht werden. Im Ausführungsbeispiel aus Figur 2 sind die Leitungsenden der zusätzlichen unisolierten Leitung 130 mit jeweils einer elektrischen Komponente $V_A$, $V_B$ (bezeichnet auch über Komponentengruppen 126, 127 in Figur 2) verbunden. Die zusätzliche unisolierte Leitung 130 ist im Ausführungsbeispiel in U-Form in die bestehende Leitungsanordnung 100 integriert. Bespielsweise kann die Integration der zusätzlichen unisolierten Leitung 130 mit einem Kurzschlusscrimp der zusätzlichen unisolierten Leitung 130 und der bestehenden Leitung 100 erfolgen.

Beispielsweise kann als betriebsbedingtes Nutzungsverhältnis eine mittlere Strombelastung erreicht sein/werden. Zum Beispiel kann eine elektrische Komponente, wie ein Blinker, nur zu 50% den eigentlichen Nennstrom ziehen, so dass in diesem Fall die mittlere Strombelastung zu einem Bezugspotential / Referenzpotential, z. B. einem Massepunkt, nur die Hälfte des Nennstroms beträgt. Dazu kann die elektrische Stromversorgung der elektrischen Komponente(n) pulsweitenmoduliert werden / durch Pulsweitenmodulation moduliert werden. Das Verhältnis von Impulsdauer (Pulsdauer) zu Periodendauer kann bestimmen, welche mittlere Strombelastung zu einem Bezugspotential / Referenzpotential erreicht wird. Die Pulsdauer bestimmt sozusagen die Einschaltzeit eines Verbrauchers. Bei einem Verhältnis von 0,5 kann die mittlere Strombelastung 50% des eigentlichen Nennstroms betragen. Bei einem Verhältnis von 0,5 kann die elektrische Komponente zur 50% der Betriebszeit den Nennstrom ziehen. Wenn die elektrische Komponente zu 50% der Betriebszeit den Nennstrom ziehen kann, zieht die elektrische Komponenten 50% des Nennstroms. Anders ausgedrückt, die elektrische Komponente zieht quasi zu 50% der Betriebszeit den Nennstrom (Tastgrad = Pulsdauer bzw. Einschaltdauer / Periodendauer bzw. (Einschaltdauer + Ausschaltdauer)). Daraus ergibt sich die mittlere Strombelastung zu 50% des Nennstroms. Als konkretes Beispiel für Verbraucher können ein Blinker eines Fahrzeugs und ein Scheibenwischer eines Fahrzeugs genannt werden. Beispielsweise können bei einem betrieblichen Nutzungsverhältnis von 0,5 der Blinker 50% und der Scheibenwischer 50% des Nennstroms ziehen. Andere Verhältnisse sind möglich. Auch andere Verbraucher sind denkbar, beispielsweise Verbraucher, die kurzzeitig eingeschaltet werden und/oder relativ wenig Strom benötigen im Vergleich zu anderen Komponenten eines Bordnetzes.

Die zusätzliche unisolierte Leitung 130 ist an ihrer Mitte - vorzugsweise auf der Länge der unisolierten Leitung 130 - über eine leitfähige Verbindung oder ein Kurzschlusscrimp an die bestehende Leitungsanordnung fixiert. Das Integrieren der zusätzlichen unisolierten Leitung 130 in die bestehende Leitungsanordnung 100 erfolgt in Figur 2 zwischen den ersten Enden 111 der Vielzahl von unisolierten Leitungen 110 und dem zusammengeführten Endabschnitt 101. Durch das Kurzschlusscrimpen und den damit aufgebrachten Druck auf die bestehenden Leitungen 110 und die zusätzliche unisolierte Leitung 130 sind diese miteinander in Kontakt oder sind kurzgeschlossen. Somit wird zwischen den Leitungen 110 und der zusätzlichen Leitung 130, sowie den Leitungen 110 untereinander das gleiche Potential hergestellt. Die Leitungen 110 und die zusätzliche unisolierte Leitung 130 sind miteinander kurzgeschlossen. Der Querschnitt zwischen dem Halter 114 und dem Bezugspotential 102 kann entsprechend der Summenströme aller elektrischen Komponenten V1-V6 und $V_A$, $V_B$ und unter Berücksichtigung der Gegebenheiten des Duty-Cycles ausgelegt werden.

Auch wenn in Figur 2 nur eine zusätzliche unisolierte Leitung 130 gezeigt ist, so kann auch mehr als eine zusätzliche unisolierte Leitung 130 vorgesehen sein und entsprechend eingebracht sein. Generell ermöglicht die unisolierte Ausgestaltung der Leitungen das einfache Einfügen mehrerer zusätzlicher unisolierter Leitungen 130. Ein einfaches Einfügen eines oder merherer zusätzlicher unisolierter Leitungen ist unter anderem daher möglich, da die / alle Leitungen sind auf gleichem Potential sind, nämliche dem Bezugspotential / Referenzpotential. Es ist daher nicht nötig, aufwändig eine geeignete Kontaktstelle zur Herstellung des gewünschten Nutzungsverhältnisses zur Anbindung an das Bezugspotential, z. B. zur Masseanbindung zu finden. Ferner gibt es kein Problem, die jeweiligen Einzelleiter und deren Einzelquerschnitte zu finden, denn diese liegen unverändert in der Anordnung vor. Das betriebsbedingte Nutzungsverhältnis (Duty-Cycle) kann entsprechend der Ausgestaltung gegeben sein und sich aus den technischen Vorgaben/Bedingungen zu den angeschlossenen Verbrauchern ergeben. Das betriebsbedingte Nutzungsverhältnis kann sich im Endeffekt auf den Querschnitt der Leitungen zwischen der Klemme/Schelle 114 und dem Bezugspotenzial 102 positiv auswirken. Beispielsweise können aufgrund des Nutzungsverhältnisses Querschnitte der Leitungen reduziert werden. Dies kann sich aus der verringerten mittleren Strombelastung ergeben.

Im Gegensatz zu einer Masseverteilung mit isolierten Leitungen und Splicen, wie sie aus dem Stand der Technik bekannt ist, zeigt die Ausführungsform gemäß Figuren 1 und 2 eine Leitungsanordnung 100 mit blanken / unisolierten Leitungen 110. Die jeweiligen Leitungen 110 laufen von den Teilnehmern / Komponenten $V_1$, ..., $V_n$ zum Bezugspotential 102, z. B. zu einem Massebolzen. Somit wird der Gesamtquerschnitt eines Bündels der Leitungen 110 ausgehend von den Komponenten $V_1$, ..., $V_n$ bis zu dem Bezugspotential 102 im Vergleich zu dem Querschnitt der jeweiligen Leitungen 110 entsprechend größer, was der jeweiligen Lastsituation entspricht. Unter der Annahme eines Duty Cycles ist ferner ein in Figur 2 beispielhaft gezeigtes "U-Splicing" oder "U-Verbinden" mit den Komponenten $V_A$ und $V_B$ möglich. Die Führungseinrichtungen 113a, 113b, 113c können dem Potentialausgleich dienen, um evtl. Störungen zu vermeiden, und der mechanischen Stabilisierung bei Abzweigungen.

Gesehen von der Seite des Bezugspotentials 102 kann gesagt werden, dass das Bezugspotential 102, z. B. der Masseanschluss an der Karosserie eines Fahrzeugs, mit einem großen Querschnitt des Endabschnitts 101 aus einem Bündel von kleineren Leitungen / Drähten zu den jeweiligen Teilnehmern / Komponenten $V_1$, ..., $V_n$ verzweigt wird. Aus Sicht der funktionalen Sicherheit ist mit der beschriebenen Anordnung eine Erhöhung der Zuverlässigkeit zu erwarten, weil die Verbindung über die gesamte Strecke nicht getrennt wird. Spliceverbindungen zum Potentialausgleich und zur Stabilität der einzelnen Masseleitungen können zusätzlich Inline, d. h. zwischen den Komponenten und dem Bezugspotential 102, gesetzt werden. Spliceverbindungen können grundsätzlich durch Krimpen, US-Schweißen (Ultraschall-Schweißen) oder Widerstandsschweißen gesetzt werden. Die Masseverteilung der Leitungsanordnung kann Teil eines Leitungssatzes mit weiteren isolierten Leitungen im Verbund sein, d. h. die unisolierten Leitungen 100 schließen das Vorhandensein von zusätzlichen isolierten Leitungen nicht aus. Die Isolation zu den anderen Leitungen ist durch deren Eigenisolation gegeben. Die Isolation zur Umgebung, z.B. Chassis, wird beispielsweise durch den üblichen Leitungsbündelschutz sichergestellt.

Mit der hierin beschriebenen Anordnung kann Materialaufwand für isolierte Kupferlitzen durch Entfall der Isolation verringert werden. Ferner kann der Installationsaufwand verringert werden, da Prozesse, wie Abisolieren und Splicekrimpen, verringert werden oder gänzlich entfallen. Spliceverbindungen können zusätzlich Inline auf die blanken Leitungen gesetzt werden, ohne die zu splicende Leitung abzuisolieren und/oder zu trennen. Generell wird eine Aufwandseinsparung erzielt durch Vermeidung der Leitungsisolation und des Abisolierprozesses. Ferner ist eine Möglichkeit der Automatisierung der Masseverbindung denkbar. Die Zuverlässigkeit der Masseverbindung durch Eliminierung von potentiellen Fehlerquellen wird gewährleistet oder erhöht.

Die hierin beschriebene Anordnung basiert auf unisolierten Leitungen, z. B. Masseleitungen oder Groundleitungen im Fahrzeug oder Automobil, und der Vermeidung des Spannungsversatzes bei spontaner Berührung durch wiederholtes Verbinden der unisolierten Einzelleiter. Ein Vorteil besteht darin, dass durch das sukzessive Zusammenführen der einzelnen Verbindungen vom Verbraucher zum Bezugspotential, z. B. Massebolzen, sich quasi automatisch die notwendige Querschnittserhöhung ergibt, ohne verschiedene Querschnitte benutzen zu müssen.

**Patentansprüche**

1. Leitungsanordnung (100) zur elektrischen Masseverteilung in einem Fahrzeug, wobei die Leitungsanordnung (100) eine Vielzahl von unisolierten elektrischen Leitungen (110) aufweist,

   wobei die Vielzahl von unisolierten elektrischen Leitungen (110) jeweils ein erstes Ende (111) und ein zweites Ende (112) aufweist, wobei das erste Ende (111) der Vielzahl von unisolierten elektrischen Leitungen (110) jeweils mit einer elektrischen Komponente einer Vielzahl von elektrischen Komponenten $(V_1\text{-}V_n)$ verbunden ist, und das zweite Ende (112) der Vielzahl von unisolierten elektrischen Leitungen (110) einen zusammengeführten Endabschnitt (101) der Leitungsanordnung (100) bildet, welcher mit einem elektrischen Bezugspotential (102), z. B. einem Massepotential, elektrisch verbunden ist.

2. Leitungsanordnung (100) nach Anspruch 1, wobei die Vielzahl von unisolierten elektrischen Leitungen (110) durchgängig von der Vielzahl von elektrischen Komponenten $(V_1\text{-}V_n)$ zu dem elektrischen Bezugspotential (102) führen.

3. Leitungsanordnung (100) nach Anspruch 1 oder 2, wobei die Leitungsanordnung (100) mindestens eine Führungseinrichtung (113a, 113b, 113c) aufweist, wobei durch die mindestens eine Führungseinrichtung (113a, 113b, 113c) mindestens eine der Vielzahl von unisolierten elektrischen Leitungen (110) geführt wird.

4. Leitungsanordnung (100) nach einem der Ansprüche 1 bis 3, wobei die Vielzahl von unisolierten elektrischen Leitungen (110) mindestens eine Gruppe mit unisolierten elektrischen Leitungen (110) aufweist, wobei die unisolierten elektrischen Leitungen (110) der mindestens eine Gruppe zu mindestens einer Komponentengruppe (122, 123, 124, 125) mit mindestens einer elektrischen Komponente der Vielzahl von elektrischen Komponenten $(V_1\text{-}V_n)$ führen.

5. Leitungsanordnung (100) nach einem der Ansprüche 1 bis 4, wobei die Vielzahl von unisolierten elektrischen Leitungen (110) mehrere Gruppen von unisolierten elektrischen Leitungen (110) aufweist oder bildet, wobei die unisolierten elektrischen Leitungen (110) einer ersten der mehreren Gruppen zu einer ersten Komponentengruppe (122) mit ersten elektrischen Komponenten der Vielzahl von elektrischen Komponenten $(V_1\text{-}V_n)$ führen und die unisolierten elektrischen Leitungen (110) einer zweiten der mehreren Gruppen zu einer zweiten Komponentengruppe (123) mit zweiten elektrischen Komponenten der Vielzahl von elektrischen Komponenten $(V_1\text{-}V_n)$ führen.

6. Leitungsanordnung (100) nach einem der Ansprüche 1 bis 5, wobei die Leitungsanordnung (100) zumindest eine zusätzliche unisolierte elektrischen Leitung (130) aufweist, wobei die Enden der zumindest einen zusätzlichen unisolierten elektrischen Leitung (130) jeweils mit einer elektrischen Komponente $(V_A, V_B)$ verbindbar oder verbunden sind und die die zumindest eine zusätzliche unisolierte elektrischen Leitung (130) zwischen das erste Ende (111) und das zweite Ende (112) der Vielzahl von unisolierten elektrischen Leitungen (110) eingebracht ist.

7. Leitungsanordnung (100) nach Anspruch 6, wobei die zumindest eine zusätzliche unisolierte elektrische Leitung (130) unter einem Nutzungsverhältnis zwischen das erste Ende (111) und das zweite Ende (112) der Vielzahl von unisolierten elektrischen Leitungen (110) eingebracht ist.

8. Leitungsanordnung (100) nach Anspruch 6 oder 7, wobei die zusätzliche unisolierte elektrische Leitung an einem zentralen Abschnitt, beispielsweise an ihrer Mitte, über eine leitfähige Verbindung in die Leitungsanordnung integriert ist oder mit einer oder mehrerer der Vielzahl von unisolierten elektrischen Leitungen (110) elektrisch verbunden ist.

9. Leitungsanordnung (100) nach einem der Ansprüche 1 bis 8, wobei der zusammengeführte Endabschnitt (101) mittels eines Kabelschuhs mit dem elektrischen Bezugspotential (102) elektrisch verbunden ist, wobei das elektrische Bezugspotential (102) ein gemeinsames elektrisches Massepotential der Vielzahl von elektronischen Komponenten ($V_1$-$V_n$) ist.

10. Bordnetz aufweisend mehrere elektrische Komponenten ($V_1$-$V_n$) und eine Leitungsanordnung (100) nach einem der Ansprüche 1 bis 9.

$V_1$

$V_2$

$V_3$

$V_4$

$V_n$

100

101 102

110

112

111

Figur 1

100

126 127

$V_1$

122

$V_A$ $V_B$

113b 130 101 102

$V_2$

$V_3$

123

113c

110

113a 114 112

$V_4$

$V_5$

124

$V_6$

125

Figur 2

Europäisches
Patentamt

European
Patent Office

Office européen
des brevets

**EUROPÄISCHER RECHERCHENBERICHT**

Nummer der Anmeldung

EP 23 15 0073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 44 29 072 C1 (PORSCHE AG [DE]) 5. Oktober 1995 (1995-10-05) * Spalte 1, Zeile 55 – Spalte 2, Zeile 33; Abbildungen * ----- | 1-10 | INV. B60R16/02 H01R4/66 H01R4/20 H01B5/00 |
| X | US 6 429 544 B1 (SASAKI ATSUSHI [JP] ET AL) 6. August 2002 (2002-08-06) * Spalte 13, Zeilen 51-54; Abbildungen * * Spalte 15, Zeilen 51-56 * ----- | 1-10 | |
| X | US 2017/201051 A1 (YAMAMOTO TAKATATSU [JP] ET AL) 13. Juli 2017 (2017-07-13) * Absätze [0005], [0040] – [0041]; Abbildungen * ----- | 1-10 | |
| X | US 2010/096185 A1 (OTSUKA YASUYUKI [JP] ET AL) 22. April 2010 (2010-04-22) * Absätze [0001], [0045] – [0047]; Abbildungen * ----- | 1-10 | |
| X | JP S63 8570 U (YAZAKI CORPORATION [JP]) 20. Januar 1988 (1988-01-20) * das ganze Dokument * ----- | 1-10 | RECHERCHIERTE SACHGEBIETE (IPC) B60R H01R H01B |

Der vorliegende Recherchenbericht wurde für alle Patentansprüche erstellt

| Recherchenort | Abschlußdatum der Recherche | Prüfer |
|---|---|---|
| Den Haag | 20. Juli 2023 | Cavallo, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 0073

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2023

| Im Recherchenbericht angeführtes Patentdokument | Datum der Veröffentlichung | Mitglied(er) der Patentfamilie | Datum der Veröffentlichung |
|---|---|---|---|
| DE 4429072 C1 | 05-10-1995 | KEINE | |
| US 6429544 B1 | 06-08-2002 | DE 10080343 B3 | 28-08-2014 |
| | | US 6429544 B1 | 06-08-2002 |
| | | WO 0042686 A1 | 20-07-2000 |
| US 2017201051 A1 | 13-07-2017 | DE 102017200104 A1 | 13-07-2017 |
| | | JP 6302494 B2 | 28-03-2018 |
| | | JP 2017123267 A | 13-07-2017 |
| | | US 2017201051 A1 | 13-07-2017 |
| US 2010096185 A1 | 22-04-2010 | CN 101681700 A | 24-03-2010 |
| | | EP 2192601 A1 | 02-06-2010 |
| | | JP 5235369 B2 | 10-07-2013 |
| | | JP 2009070769 A | 02-04-2009 |
| | | US 2010096185 A1 | 22-04-2010 |
| | | WO 2009038099 A1 | 26-03-2009 |
| JP S638570 U | 20-01-1988 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- JP 2020170642 A